(19) **Europäisches Patentamt**

**European Patent Office**

**Office européen des brevets**

(11) Veröffentlichungsnummer: **0 137 382**
**B1**

(12) # EUROPÄISCHE PATENTSCHRIFT

(45) Veröffentlichungstag der Patentschrift:
**11.05.88**

(51) Int. Cl.⁴: **H 04 M 1/18**

(21) Anmeldenummer: **84111269.1**

(22) Anmeldetag: **21.09.84**

(54) Sprechhörer, insbesondere für ein Autotelefon.

(30) Priorität: 11.10.83 CH 5528/83
15.12.83 CH 6678/83
27.08.84 CH 4080/84

(43) Veröffentlichungstag der Anmeldung:
**17.04.85 Patentblatt 85/16**

(45) Bekanntmachung des Hinweises auf die Patenterteilung:
**11.05.88 Patentblatt 88/19**

(84) Benannte Vertragsstaaten:
**AT CH DE FR GB IT LI NL SE**

(56) Entgegenhaltungen:
EP - A - 0 057 658
DE - A - 2 009 599
FR - A - 1 262 722
US - A - 3 878 343
US - A - 4 153 822

MOTOROLA TECHNICAL DEVELOPMENTS, Band 3, Nr.
1, März 1983, Seiten 8,9, SCHAUMBURG, ILLINOIS (US),
D.E. IRVING: "Handset latch & delatch system"

(73) Patentinhaber: **Peiker, Heinrich Andreas,
Terracinaweg 5, D-6380 Bad Homburg v.d. Höhe (DE)**

(72) Erfinder: **Peiker, Andreas,
Terracinaweg 5 Postfach 2055, D-6380 Bad Homburg v.d.
Höhe (DE)**
Erfinder: **Kehry, Manfred, Talblick 28, D-7240 Horb 1 (DE)**

(74) Vertreter: **Keller, René, Dr. et al, Patentanwälte Hartmut
Keller, Dr. René Keller Postfach 12, CH-3000 Bern 7 (CH)**

## Beschreibung

Die Erfindung betrifft einen Sprechhörer mit einem Bügel, insbesondere für ein Autotelefon.

Ein Sprechhörer mit einem Bügel ist aus der EP-A 57 658 bekannt. Der Bügel ist eine Öse, die an einem leistenförmigen Aufhängelement gebildet ist und zum Aufhängen des als Kompaktfernsprechapparat ausgebildeten Sprechhörers an einem Haken oder Nagel dient. Das Aufhängelement ist verschiebbar im Sprechhörer gelagert und mit dem Gabelschalter verbunden, so dass dieser beim Aufhängen des Sprechhörers an der Öse des Aufhängelements durch dessen Verschiebung selbsttätig umgeschaltet wird.

Die Erfindung befasst sich mit einem beim Stand der Technik bisher nicht erkannten Problem, nämlich dem Problem, dass man beim Telefonieren (bzw. im Funksprechverkehr) die den Sprechhörer haltende Hand plötzlich und dringend für andere Aufgaben benötigt und keine Zeit mehr hat, den Sprechhörer abzulegen, bzw. einen geeigneten Ablageplatz für den Sprechhörer zu suchen. (Bei einem Telefon kommt die Sprechhörer-Halterung bzw. Auflage für das Ablegen nicht in Betracht, weil sonst das Telefongespräch infolge der Betätigung des Gabelschalters abgebrochen würde.) Man muss dann mit der den Sprechhörer haltenden Hand andere Tätigkeiten ausüben, wobei der Sprechhörer nicht mehr fest gehalten werden kann, so dass die Gefahr besteht, dass er entweder aus der Hand rutscht oder die dringende Tätigkeit unterbleibt bzw. abgebrochen wird, um das Abrutschen des Sprechhörers aus der Hand aufzuhalten.

Das Problem ist besonders gravierend bei einer Tätigkeit, die plötzlich und unverzüglich die Zuhilfenahme der anderen Hand erfordert, um einer Gefahr zu begegnen. Das ist zum Beispiel beim Autofahren der Fall. Dabei muss die den Sprechhörer haltende Hand u.U. plötzlich kurzzeitig für die Fahrzeugbedienung (Ausweichen, Kurvenfahren, Schalten, Abblenden, Einschalten der Scheibenwischer usw.) zu Hilfe genommen werden. Das hierbei bisher leicht mögliche aus der Hand Gleiten des Sprechhörers kann nicht nur Beschädigungen des Sprechhörers sondern einen Unfall zur Folge haben, nämlich z.B. dann, wenn der Fahrer reflexartig nach dem fallenden Hörer greift oder wenn der Hörer auf das Knie oder den Fuss des Fahrers fällt und eine Reflexbewegung (z.B. Kniescheibenreflex) auslöst. Gravierende Folgen kann das aus der Hand Gleiten des Hörers z.B. auch bei der Bedienung einer Maschine usw. haben.

Das Problem besteht nicht nur, wenn die den Sprechhörer haltende Hand für gänzlich andere Tätigkeiten benötigt wird, sondern auch, wenn sie für andere Tätigkeiten (als das blosse Halten des Sprechhörers) im Zusammenhang mit dem Telefonieren bzw. Funksprechverkehr gebraucht wird, z.B. bei einem mit Bedienungstasten, wie einer Sprechtaste für abwechselndes Sprechen und Hören im Funksprechverkehr, ausgerüsteten Sprechhörer. Denn wenn man nach Drücken einer Bedienungstaste diese wieder loslässt, entspannt man unwillkürlich die ganze Hand, so dass der dann nur noch locker gehaltene Hörer leicht aus der Hand rutschen kann.

Der Erfindung liegt die Aufgabe zugrunde, einen Sprechhörer der eingangs genannten Art zu schaffen, der ohne jegliche Behinderung durch den Bügel ergriffen werden kann, und es ermöglicht, die ihn haltende Hand für andere Tätigkeiten mit möglichst grosser Bewegungsfreiheit und möglichst geringer Behinderung durch ihn einzusetzen, sowie gewährleistet, dass er dabei unter allen Umständen an der Hand gesichert bleibt.

Die erfindungsgemässe Lösung dieser Aufgabe kennzeichnet sich durch die im Patentanspruch 1 angegebenen Merkmale.

Die Vorteile der Erfindung sind insbesondere in folgendem zu sehen: Durch die erfindungsgemässe Anordnung und Ausgestaltung des Bügels ist gewährleistet, dass der Daumen der den Griff des Sprechhörers beim Abheben ergreifenden Hand zwangsläufig in den Raum zwischen dem Bügel und dem Griff eingeführt wird. Damit bleibt der Sprechhörer vom Moment des Abhebens an stets unter allen Umständen am Daumen gesichert und die übrigen Finger können mit grösstmöglicher Bewegungsfreiheit und unbehindert vom Sprechhörer und Bügel für andere Tätigkeiten eingesetzt werden. Da der Sprechhörer allein durch den Daumen zuverlässig gehalten ist, können die übrigen Finger zusammen mit dem ganzen Handteller für andere Tätigkeiten eingesetzt werden. Man kann also die Hand öffnen und bei dann am Daumen hängendem Sprechhörer z.B. das Lenkrad ergreifen (zwischen den Fingern und dem Handteller fassen), was bisher nicht möglich war, weil der Sprechhörergriff stets am Handteller anliegen musste.

Weil der Bügel an der Innenseite des an die Hörmuschel angrenzenden Teils des Griffs angeordnet ist, kann der Sprechhörer wie ein üblicher, bügelloser Hörer abgehoben werden, ohne dass der Bügel das Abheben irgendwie beeinträchtigen würde. (Wäre der Bügel an der Aussenseite des Griffs angeordnet, müsste man zuerst in ihn hineingreifen und erst dann könnte man den Sprechhörer abheben.)

Bevorzugte Weiterbildung der Erfindung sind Gegenstand der Patentansprüche 2 bis 10. Die Ansprüche 2 bis 4 befassen sich mit einer besonders zweckmässigen Ausgestaltung der Bügelform und des im Bügelbereich liegenden Sprechhörergehäuses; die Ansprüche 5 bis 10 mit einer auch bei Unfällen zuverlässigen Sicherung des Sprechhörers an einer in einem Fahrzeug montierten Halterung, insbesondere mit der Ausbildung und Anordnung von zu dieser Sicherung gehörender Elemente (Sperrklinken, Drucktasten für deren Ausrasten usw.) in bezug auf den Bügel. Diese Aspekte sind auch in der Parallelanmeldung EP-A 137 383 enthalten.

Im folgenden werden anhand der Zeichnung Ausführungsbeispiele der Erfindung näher erläutert. Es zeigen:

Fig. 1 eine perspektivische Ansicht eines Autotelefons,

Fig. 2 einen Querschnitt durch den eine Sperre und eine Ausrückvorrichtung enthaltenden Teil der Halterung des Autotelefons nach der Linie II–II in Fig. 1,

Fig. 3 eine Draufsicht auf den die Sperre und die Ausrückvorrichtung enthaltenden Teil der Halterung des Autotelefons von Fig. 1,

Fig. 4 eine teilweise geschnittene Seitenansicht des sprechseitigen Teils des Autotelefons von Fig. 1,

Fig. 5 eine teilweise geschnittene (Linie V–V in Fig. 6) Seitenansicht des hörseitigen Teils einer Variante des Autotelefons von Fig. 1,

Fig. 6 eine teilweise geschnittene Draufsicht auf den die Sperre für die Hörmuschel und die Ausrückvorrichtung enthaltenden Teil der Halterung des Autotelefons von Fig. 5,

Fig. 7 eine Ansicht der Sperre und Ausrückvorrichtung in Blickrichtung VII in Fig. 6, ohne die Halterung,

Fig. 8 eine Untersicht des in Fig. 5 dargestellten Teils des Sprechhörers,

Fig. 9 eine teilweise geschnittene Seitenansicht des in Fig. 5 dargestellten Teils des Sprechhörers,

Fig. 10 eine teilweise geschnittene Seitenansicht einer Weiterbildung des Autotelefons von Fig. 5–9,

Fig. 11 eine teilweise geschnittene Draufsicht auf die Halterung des Autotelefons von Fig. 10,

Fig. 12 eine teilweise geschnittene Seitenansicht des in eine andere Halterung gehängten Sprechhörers von Fig. 8 und 9, und

Fig. 13 eine Draufsicht auf den in die Halterung gehängten Sprechhörer von Fig. 12 in Blickrichtung XIII in Fig. 12.

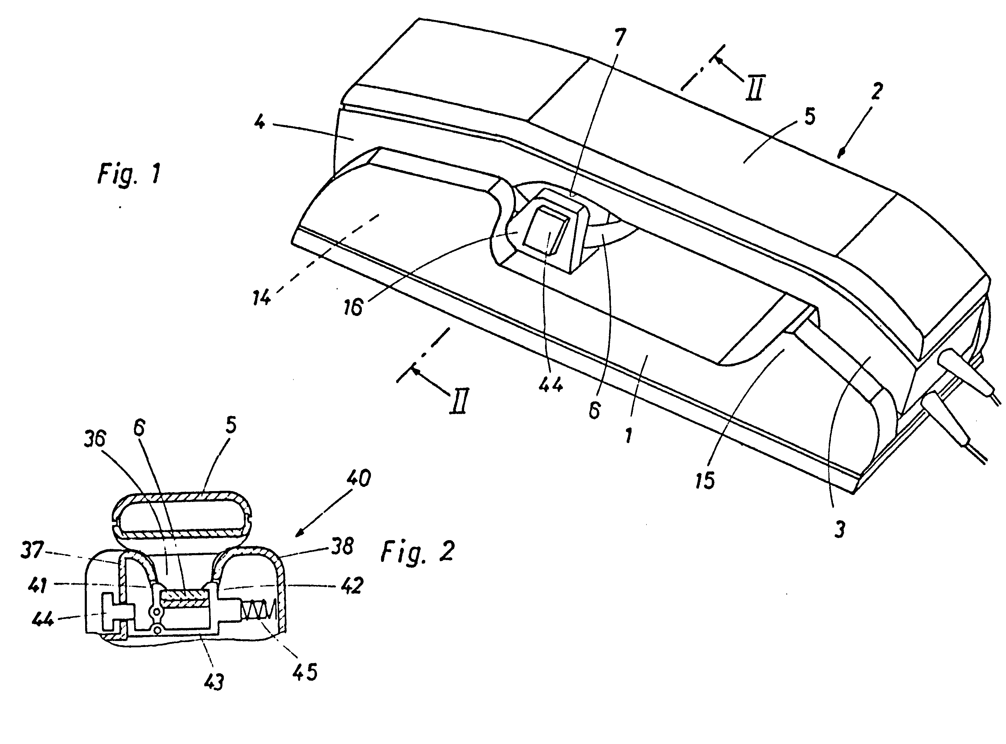

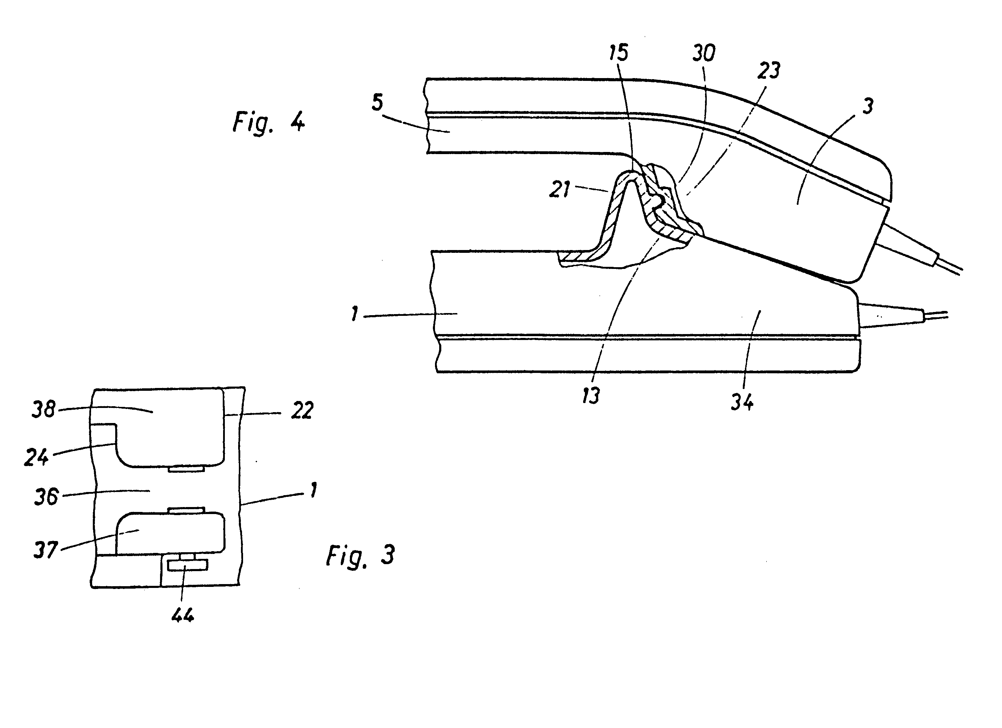

Das in Fig. 1 bis 4 dargestellte Autotelefon hat eine im Fahrzeug zu befestigende, als Auflagevorrichtung ausgebildete Halterung 1 für den Sprechhörer (Handapparat) 2. Die Sprechmuschel 3 (d.i. der die Sprechkapsel aufnehmende Gehäuseteil des Sprechhörers) und die Hörmuschel 4 stehen in der üblichen Weise quer zum Griff 5 des Sprechhörers vor.

An der Innenseite des an die Hörmuschel 4 angrenzenden Teils des Griffs 5 des Sprechhörers 2 ist ein Bügel 6 angeordnet, der den Eckbereich zwischen der Hörmuschel 4 und dem Griff 5 überbrückt. Der dem Bügel 6 benachbarte Bereich 7 des Griffs 5 ist nach innen gewölbt und der Bügel 6 ist so bemessen, dass man mit dem Daumen der den Griff 5 haltenden Hand bequem durch den Raum zwischen dem Bügel 6 und der Innenwölbung 7 des Griffs 5 hindurchgreifen kann.

Durch den Bügel 6 ist der Sprechhörer am Daumen gegen ein Abgleiten von der Hand gesichert, wenn während des Telefonierens kurzzeitig die den Sprechhörer haltende Hand für die Fahrzeugbedienung zu Hilfe genommen werden muss (Kurvenfahren, Schalten, Einschalten der Scheibenwischer, Abblenden usw.).

Die Halterung 1 hat zwei Lagermulden 13 und 14 für die Sprech- und die Hörmuschel 3 und 4. Die beiden Lagermulden 13 und 14 sind an den einander zugewandten Enden durch je eine Erhebung 15 und 16 begrenzt. Die einander zugewandten Wände der Erhebungen 15, 16 sind mit 21, 22, die einander abgewandten Wände mit 23, 24 bezeichnet.

An der Wand 23 der Erhebung 15 ist eine Nase 30 angeformt, die beim Auflegen des Sprechhörers in eine Vertiefung an der der Hörmuschel 4 zugewandten Seite der Sprechmuschel 3 hineingreift. Die Lagermulde 13 ist am der Erhebung 15 abgewandten Ende offen und hat Seitenwände 34, welche die Sprechmuschel 3 gegen eine seitliche Verschiebung sichern.

Die Erhebung 16 hat im mittleren Bereich ihrer Querabmessung eine Vertiefung 36 für die Aufnahme des Bügels 6. Sie hat also eine gabelartige Form mit zwei die Vertiefung 36 begrenzenden Gabelschenkeln 37, 38 zwischen denen der Bügel 6 beim Auflegen in die Vertiefung 36 hinein gleitet. Die gabelförmige Erhebung 16 ist hohl und in ihr ist eine Sperr- bzw. Verriegelungsvorrichtung 40 mit einer Ausrückvorrichtung angeordnet.

Die Verriegelungsvorrichtung 40 wirkt in der weiter unten beschriebenen Weise mit dem Bügel 6 zusammen und sichert diesen und damit auch die Hörmuschel 4 an der Halterung 1. Sie hat zwei Schnappriegel oder Sperrklinken 41, 42, die durch Aussparungen in den beiden einander zugewandten Wänden der Gabelschenkel 37, 38 von beiden Seiten in die Vertiefung 36 hineinragen. Die Klinke 42 ist am in Fig. 2 rechten Ende einer Schubstange 43 gebildet, die mittels einer an der Aussenseite des Schenkels 37 angeordneten Taste 44 gegen die Kraft einer an der Aussenwand des Schenkels 38 abgestützten Feder 45 vorschiebbar ist. Die Klinke 41 ist schwenkbar um eine Achse gelagert und an der Schubstange 43 angelenkt, so dass beim durch Druck auf die Taste 44 bewirkten Vorschub der Stange 43 die beiden Klinken 41, 42 aus der Vertiefung 36 heraus bewegt werden. Wird die Taste 44 losgelassen, so drückt die Feder 45 die Schubstange 43 und die Klinken 41, 42 in die in Fig. 2 dargestellte Ruhelage.

Der Sprechhörer 2 kann in horizontaler und in nach vorne oder nach hinten geneigter Lage aufgelegt werden. Wenn er mit der Sprechmuschel 3 voran aufgelegt wird, gleitet zuerst die Nase 30 in die Vertiefung der Sprechmuschel 3 und anschliessend werden die Klinken 41, 42 durch den unteren Teil des Bügels 6 zurückgedrängt und schnappen dann über diesem ein, so dass der Bügel 6 zwischen den Klinken 41, 42 und dem Boden der Vertiefung 36 gehalten ist. Wenn er mit der Hörmuschel 4 voran aufgelegt wird, schlägt infolge deren Abstützung an der Erhebung 16 die Sprechmuschel 3 an der Nase 30 an. Durch den Druck auf den Sprechhörer 2 biegt sich dessen aus Kunststoff bestehendes Gehäuse infolge seiner Eigenelastizität etwas auf und die Nase 30 rutscht entlang der schrägen Fläche der Sprechmuschel 3 in die Vertiefung hinein. Der Sprechhörer 3 ist nun durch die Klinken 41, 42 und die Nase 30 gegen ein Abheben gesichert.

Die Lagermulden 13, 14, die Erhebung 15 und die Nase 30 könnten weggelassen werden, weil die Klinken 41, 42 zusammen mit den Gabelschenkeln 37, 38 den Sprechhörer an sich bereits genügend sichern. Ohne die Nase 30, d.h. ohne eine die Sprechmuschel 3 sichernde Sperre besteht jedoch die Gefahr, dass die bei einem Unfall auf den Sprechhörer wirkenden Kräfte (man rechnet mit Beschleunigungen bis zu 30 g) durch Hebelwirkung so verstärkt werden, dass die Klinken 41, 42 den Bügel 6 nicht mehr zu halten vermögen. Deshalb ist eine ein Abheben der Sprechmuschel verhindernde Sperre, z.B. in Form der Nase 30 bevorzugt.

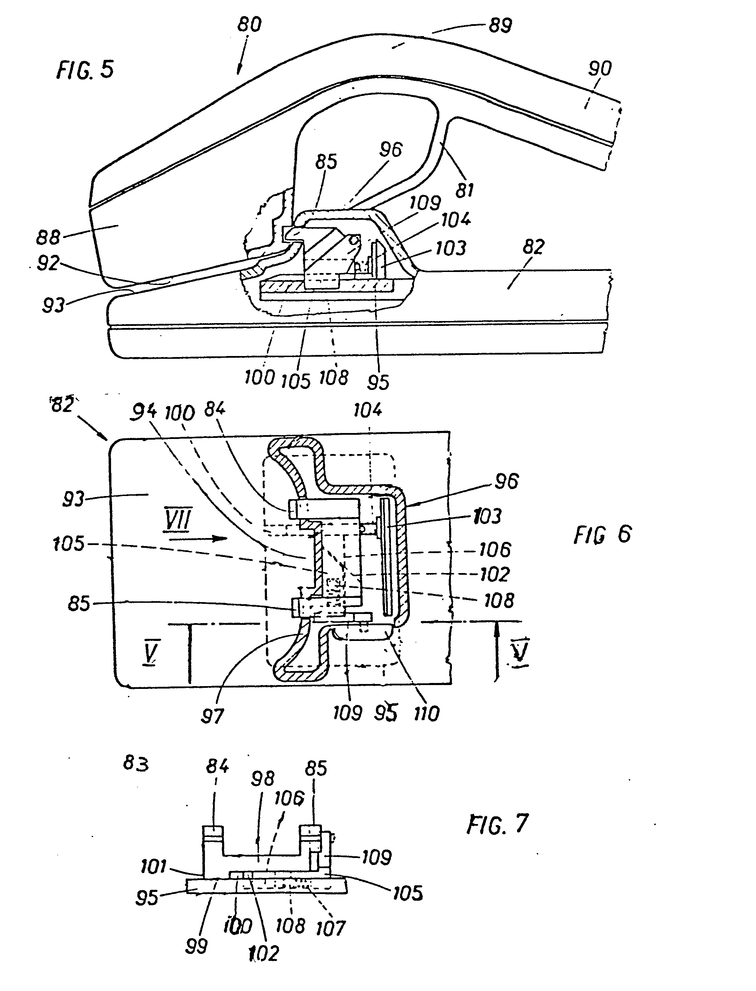

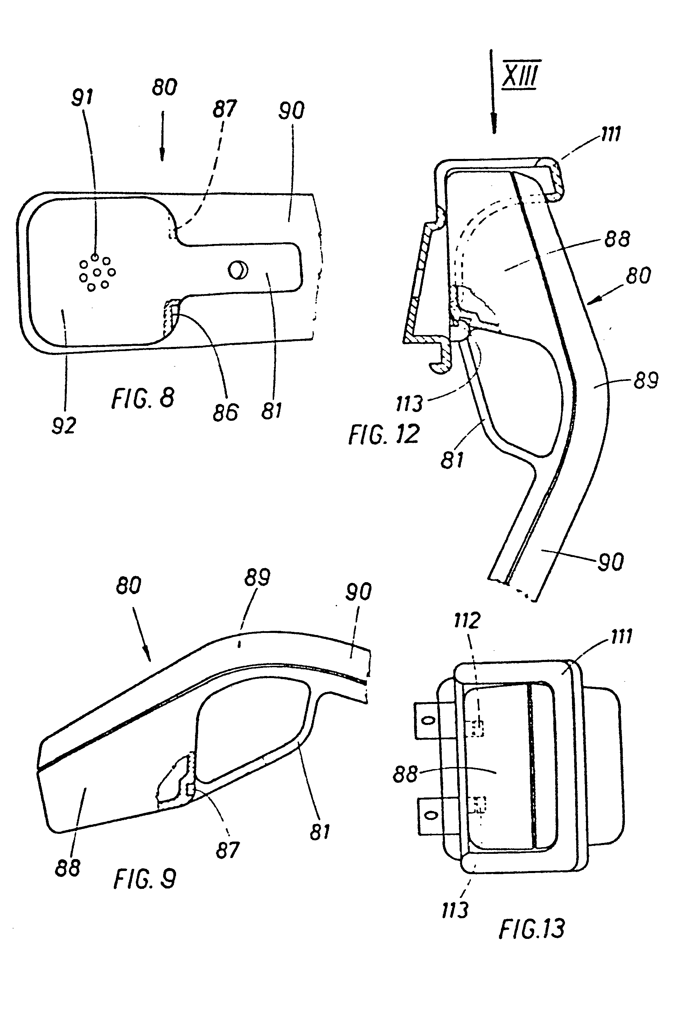

Bei der in Fig. 5–9 dargestellten Variante des Autotelefons hat der Sprechhörer 80 ebenfalls einen den Eckbereich zwischen der Hörmuschel und dem Griff überbrückenden Bügel 81 und die Halterung 82 ist auch mit einer eine Ausrückvorrichtung aufweisenden Sperr- bzw. Verriegelungsvorrichtung 83 ausgerüstet, deren Schnappriegel oder Klinken 84, 85 jedoch nicht in den Bügel 81 greifen sondern in Aussparungen 86, 87 der Hörmuschel 88, wie im folgenden erläutert.

Der Sprechhörer 80 ist in Längsrichtung stumpfwinklig abgebogen, wobei die Abbiegung 89 im an die Hörmuschel 88 angrenzenden Teil des Griffs 90 gebildet ist. Der Bügel 81 ist schmaler als die Hörmuschel 88 ausgeführt und erstreckt sich vom Rand der die Schallöffnungen 91 aufweisenden Wand 92 der Hörmuschel über den Eckbereich zwischen der Hörmuschel und dem Griff und über die Abbiegung 89 hinweg an die Innenseite des an die Abbiegung anschliessenden, geradlinig zur Sprechmuschel verlaufenden Teils des Griffs 90. Die Aussparungen 86, 87 sind an dem der Sprechmuschel zugewandten, unteren Randbereich der Hörmuschel 88 beidseits des Bügels 81 angeordnet.

Die Halterung 82 ist am hinteren (in Fig. 5 und 6 nicht dargestellten) Ende gleich wie die Halterung 1 mit einer Lagermulde für die Sprechmuschel und einer in eine Vertiefung oder Aussparung der Sprechmuschel greifenden Nase ausgebildet. Am vorderen Ende hat die Halterung 82 keine Lagermulde sondern eine ebene oder leicht konvex gewölbte Auflagefläche 93 für die Hörmuschel 88. Die Halterung 82 ist über ihre ganze Länge gleich breit ausgeführt und der Sprechhörer 80 verjüngt sich von der Hör- zur Sprechmuschel, so dass die gleich breit wie die Halterung 82 ausgeführte Hörmuschel 88 bündig an die Ränder der Halterung anschliesst und die schmalere Sprechmuschel in die Lagermulde passt.

Die Verriegelungsvorrichtung 83 ist auf einer in der hohlen Halterung 82 montierten Platte 95 angeordnet und ragt in den durch eine an die Auflagefläche 93 angrenzende Erhebung 96 der Halterung begrenzten Hohlraum. Die vordere Wand 97 der Erhebung 96 ist dem die Aussparungen 86, 87 aufweisenden, unteren Randbereich der Hörmuschel 88 angepasst und entsprechend diesem zur Vertikalen geneigt, so dass die Hörmuschel beim Auflegen in Fig. 5 nach links (von der Lagermulde für die Sprechmuschel hinweg) und beim Abheben nach rechts rutscht. Die Wand 97 hat zwei Öffnungen für die beiden nach Art einer Schlossfalle oben abgeschrägten Schnappriegel 84, 85, die an den Schenkeln eines U-förmigen Trägers 98 angeformt sind. Die obere Wand der Erhebung 96 weist eine zwischen die Schenkel des U-Trägers 98 hineinragende Einbuchtung 94 auf, welche den Bügel 81 des aufgelegten Sprechhörers 80 aufnimmt. Der U-Träger 98 hat einen auf der Platte 95 gleitenden, trapezförmigen Fuss 99 mit einer Nut, die auf einer in Längsrichtung der Halterung 82 auf der Platte 95 angeordneten Führungsschiene 100 geführt ist. Der eine Schenkel 101 des trapezförmigen Fusses 99 ist bündig mit der in Fig. 6 oberen (in Fig. 7 linken) Seitenfläche des Trägers 98, der andere Schenkel 102 grenzt an das vordere, (in Fig. 6 linke) Ende der Nut an und verläuft unter einem Winkel von 45° schräg nach hinten von der Nut weg. Eine an einer Stützwand 103 abgestützte Druckfeder 104 drückt den Träger 98 in Fig. 6 nach links, wodurch der schräge Schenkel 102 an eine entsprechend schräge Randfläche eines Schiebers 105 einer Ausrückvorrichtung gedrückt wird. Der Schieber 105 ist in einer rechteckigen Vertiefung 106 der Platte 95 senkrecht zur Schiene 100 verschiebbar gelagert, und zwar gegen die Kraft einer Druckfeder 107, die in einer Aussparung an der Unterseite des Schiebers angeordnet und deren eines Ende am in Fig. 6 unteren Rand der Aussparung und deren anderes Ende an einem vom Boden der Vertiefung 106 vorstehenden Bolzen 108 abgestützt ist, der einen Anschlag für den in Fig. 6 oberen Rand der Aussparung bildet und den Schieber 105 gegen die Kraft der Feder 107 in der in der Zeichnung dargestellten Ruhelage hält. Die Dicke des Schiebers 105 ist so bemessen, dass dieser aus der Vertiefung 106 herausragt und die an den Fuss 99 angrenzende (in Fig. 7 rechte) untere Fläche des Trägers 98 gleitend auf ihm abgestützt ist. Am in Fig. 6 unteren Ende des Schiebers 105 ist ein schräg nach oben ragendes, plattenförmiges Organ 109 angeformt, das eine Drucktaste 110 trägt, welche durch eine Aussparung in der Seitenwand der Erhebung 96 drückbar ist. Die Drucktaste 110 wird zweckmässig als Leuchttaste ausgeführt.

Beim Auflegen des Sprechhörers 80 werden die Schnappriegel 84, 85 vom Rand der Hörmuschelwand 92 zurückgedrängt, worauf sie unter der Wirkung der Feder 104 in die Aussparungen 86, 87 einschnappen. Die Nase 30 rastet dabei in der oben im Zusammenhang mit Fig. 1 bis 4 erläuterten Weise in die Vertiefung der Sprechmuschel 3 ein.

Wenn bei einem Unfall eine starke Zugkraft auf den Sprechhörer 80, wirkt, bleibt dieser an der Halterung 82 gesichert, und zwar selbst dann, wenn er sich infolge seiner Eigenelastizität etwas verbiegt. Denn die Zugkräfte greifen am Schwerpunkt des Sprechhörers, also am Griff 90 zwischen der Sprech- und Hörmuschel 3, 88 an und bewirken deshalb nicht ein Aufbiegen sondern im Gegenteil ein Zusammenbiegen des Sprechhörers 80, d.h. eine Annäherung von Sprech- und Hörmuschel 3, 88 und damit sogar noch eine festere Halterung.

Zum Abheben des Sprechhörers 80 wird die Taste 110 mit dem Daumen der ihn ergreifenden Hand gedrückt, wodurch die Schnappriegel 84, 85 aus den Aussparungen 86, 87 ausrücken. Beim Abheben des Sprechhörers wird der Daumen an den vom Bügel 81 umschlossenen Griffteil gelegt, was infolge des durch die Abbiegung 89 geschaffenen, grossen Zwischenraums zwischen dem Bügel und dem Griff nicht nur mühelos sondern auch zwangsläufig geschieht, weil der Bügel eine Bewegung des Daumens aus dem von ihm umschlossenen Griffbereich heraus behindert. Der Bügel 81 sichert dann den Sprechhörer 80, wie oben im Zusammenhang mit dem Bügel 6 erläutert, gegen ein aus der Hand gleiten. Wegen des durch die Abbiegung 89 geschaffenen, grossen Zwischenraums zwischen Bügel 81 und Griff 90 kann der Daumen beim Auflegen des Sprechhörers im Bügel belassen werden.

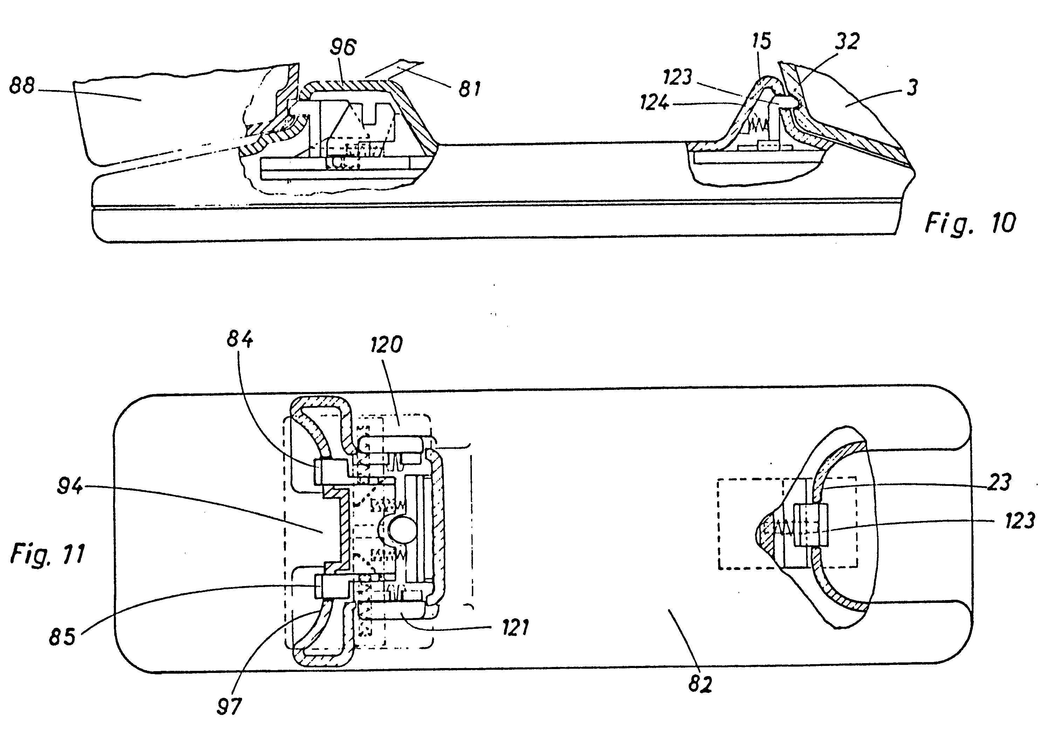

Die in Fig. 10 und 11 dargestellte Ausführungsform unterscheidet sich von der im Zusammenhang mit Fig. 5–9 beschriebenen durch die andere Ausbildung der Ausrückvorrichtung und der die Sprechmuschel 3 sichernden Sperre: Die Ausrückvorrichtung hat an beiden Seiten der Erhebung 96 je eine Drucktaste 120, 121. Beide Tasten 120, 121 wirken unabhängig voneinander und in der gleichen Weise wie die Taste 110 auf je einen entsprechend dem Schieber 105 am Fuss des die Schnappriegel 84, 85 aufweisenden Trägers angreifenden Schieber. Die Schnappriegel 84, 85 können damit sowohl durch Druck auf die eine Taste 120 wie auch durch Druck auf die andere Taste 121 ausgerückt werden.

Die in die Vertiefung der Sprechmuschel 3 eingreifende Sperre ist durch eine Klinke 123 gebildet, deren einer Schenkel im Hohlraum der Erhebung 15 angeordnet und durch eine Feder 124 belastet ist, und deren anderer Schenkel durch die Wand 23 der Erhebung 15 hindurch ragt und nach Art einer Schlossfalle am freien Ende abgeschrägt ist.

Beim Auflegen der Sprechmuschel 3 wird die Klinke 123 gegen die Kraft der Feder 124 zurückgedrängt und klinkt dann in die Vertiefung der Sprechmuschel ein. Die Vertiefung und der in sie eingreifende Klinkenteil sind dabei so ausgebildet, dass die Sprechmuschel 3 nicht gehoben, jedoch nach Ausrücken der Schnappriegel 84, 85 und leichtem Abheben der Hörmuschel 88 durch eine kleine horizontale Bewegungskomponente aus der Klinke 123 herausrutscht. Die horizontale Bewegungskomponente ergibt sich dabei zwangsläufig dadurch, dass die Hörmuschel 88 beim Ausrücken der Schnappriegel 84, 85 über die schräge Vorderwand 97 der Erhebung 96 gleitet.

Die Klinke 123 wird anstelle der Nase 30 dann vorgesehen, wenn ein Biegen des Sprechhörers unerwünscht oder nicht möglich ist, z.B. wenn eine Wählvorrichtung im Griff des Sprechhörers angeordnet ist. Ist dies nicht der Fall, wird also z.B. die Wählvorrichtung in der Halterung angeordnet, so ist die Nase 30 wegen der einfachen Herstellung bevorzugt.

Die Nase 30 kann statt an der Erhebung 15 auch an der Sprechmuschel 3 gebildet sein. Ferner können die Sperrklinken 41, 42 bzw. 84, 85 zusammen mit der Ausrückvorrichtung und deren Taste oder Tasten am Sprechhörer angeordnet sein. Gegenüber der Anordnung der Ausrückvorrichtung und der Sperrklinken an der Halterung hat dies jedoch den Nachteil, dass der Sprechhörer schwerer und unhandlicher wird.

Das für den Fernsprech- bzw. Funksprechverkehr verwendete Autotelefon kann in der üblichen Weise mit den erforderlichen Schaltungen, Wählvorrichtungen und Bedienungselementen ausgerüstet werden. Für abwechselndes Sprechen und Hören im Funksprechverkehr kann eine Sprechtaste an der Innenseite des Griffs des Sprechhörers zwischen dem Bügel und der Sprechmuschel angeordnet sein. Die Sprechtaste kann auch an der Innenseite des der Sprechmuschel zugewandten Teils des Bügels angeordnet sein, so dass sie wie der Abzug einer Handfeuerwaffe gedrückt werden kann.

Der Gabel- oder Hakenumschalter eines Autotelefons für gleichzeitiges Sprechen und Hören kann am Boden der den Bügel aufnehmenden Vertiefung 36 bzw. 94 angeordnet sein.

Der mit dem Bügel 81 ausgerüstete Sprechhörer 80 ist zwar in Verbindung mit der beschriebenen Halterung 82 für ein Autotelefon besonders vorteilhaft; er kann aber auch mit einer anderen Telefon-Halterung, beispielsweise der in Fig. 12 und 13 dargestellten Halterung 111 verwendet werden. Diese besteht aus einem z.B. an einer Wand zu befestigenden Gestell mit zwei nach oben gerichteten Haken 112, 113, in welche die Hörmuschel 88 mit ihren Aussparungen 86, 87 einzuhängen ist. Zum Einhängen an eine Halterung mit lediglich einem Haken könnte der Sprechhörer einen aus zwei in einem Abstand nebeneinander verlaufenden Teilen bestehenden oder in Richtung auf die Hörmuschel gegabelten Bügel aufweisen und die Aussparung zwischen den beiden Teilen bzw. Gabelteilen des Bügels an der Hörmuschel vorgesehen sein.

**Patentansprüche**

1. Sprechhörer (2; 80) mit einem Bügel (6; 81), insbesondere für ein Autotelefon, dadurch gekennzeichnet, dass der Bügel (6; 81) an der Innenseite des an die Hörmuschel (4; 88) angrenzenden Teils des Griffs (5; 90) angeordnet und so ausgestaltet ist, dass der Daumen der den Griff (5; 90) ergreifenden Hand des Benutzers in den Raum zwischen dem Bügel (6; 81) und dem Griff (5; 90) einführbar ist, damit der Sprechhörer (2; 80) am Daumen hängend sicher gehalten bleibt und die übrigen Finger für andere Tätigkeiten frei zur Verfügung stehen.

2. Sprechhörer nach Anspruch 1, dadurch gekennzeichnet, dass der Bügel (6; 81) den Eckbereich zwischen der Hörmuschel (4; 88) und dem Griff (5; 90) überbrückt.

3. Sprechhörer nach Anspruch 2, dadurch gekennzeichnet, dass das eine Ende des Bügels (81) an den Rand der die Schallöffnung (91) aufweisenden Wand (92) der Hörmuschel (88) anschliesst.

4. Sprechhörer nach Anspruch 2 oder 3, dadurch gekennzeichnet, dass der Sprechhörer (80) in Längsrichtung stumpfwinklig abgebogen ist, wobei die Abbiegung (89) im an die Hörmuschel (88) angrenzenden Teil des Griffs (90) gebildet ist und der Bügel (81) sich über die Abbiegung (89) hinweg erstreckt.

5. Sprechhörer nach einem der Ansprüche 2 bis 4, dadurch gekennzeichnet, dass an der der Sprechmuschel (3) zugewandten Seite der Hörmuschel (88) wenigstens eine Aussparung (86, 87) für die Aufnahme wenigstens einer Sperrklinke (84, 85) oder wenigstens eines Hakens (112, 113) einer Halterung (82, 111) für den Sprechhörer (80) vorgesehen ist, wobei entweder der Bügel (81) schmaler als die Hörmuschel (88) ausgeführt und zwei Aussparungen (86, 87) beidseits des Bügels (81) vorgesehen sind, oder der Bügel durch zwei in einem Abstand nebeneinander verlaufende Teile gebildet oder in Richtung auf die Hörmuschel gegabelt ist und die Aussparung zwischen den beiden Teilen bzw. Gabelschenkeln des Bügels vorgesehen ist.

6. Sprechhörer nach einem der Ansprüche 1 bis 5, mit einer Halterung (1; 82), die eine die der Sprechmuschel (3) zugewandte Seite der Hörmuschel (4; 88) abstützende Erhebung (16; 96) hat, dadurch gekennzeichnet, dass der Bügel (6; 81) schmaler als die Hörmuschel (4; 88) ist, und die Erhebung (16; 96) eine den Bügel (6; 81) beim Auflegen oder Einhängen des Sprechhörers (2; 80) aufnehmende Vertiefung (36; 94) hat, in welcher der Bügel (6; 81) gegen seitliche Verschiebung gesichert ist.

7. Sprechhörer nach einem der Ansprüche 1 bis 6, mit einer in einem Fahrzeug zu befestigenden Halterung (1; 82), dadurch gekennzeichnet, dass der Bügel (6) oder die Hörmuschel (88) an der Halterung (1; 82) durch eine beim Auflegen bzw. Einhängen des Sprechhörers (2; 80) selbsttätig einrastende, jedoch durch Zug auf den aufgelegten bzw. eingehängten Sprechhörer (2; 80) nicht überwindbare Sperre (41, 42; 84, 85) gesichert ist, die zum Abnehmen bzw. Abhängen des Sprechhörers mittels einer Ausrückvorrichtung (44; 110;, 120, 121) lösbar ist.

8. Sprechhörer nach Anspruch 7, wobei die Halterung (1; 82) zwei die einander zugewandten Seiten der Sprech- und Hörmuschel (3, 4; 3, 88) abstützenden Erhebungen (15, 16; 15, 96) hat, dadurch gekennzeichnet, dass die Sperre (41, 42; 84, 85) an der die Hörmuschel (4; 88) abstützenden Erhebung (16; 96) gelagert ist und die Sprechmuschel (3) an der Halterung (1; 82) durch eine zweite, an der die Sprechmuschel (3) abstützenden Erhebung (15) gelagerte oder angreifende Sperre (30; 123) gesichert ist, die beim Auflegen bzw. Einhängen des Sprechhörers (2; 80) einrastet, jedoch durch Zug auf den aufgelegten bzw. eingehängten Sprechhörer nicht überwindbar ist.

9. Sprechhörer nach Anspruch 8, dadurch gekennzeichnet, dass die erste Sperre durch wenigstens eine nach Art einer Schlossfalle abgeschrägte und federbelastete Klinke (41, 42; 84, 85) und die zweite Sperre durch eine entsprechende Klinke (123) oder durch eine Nase (30) gebildet ist, wobei das Sprechhörergehäuse im Falle der als Nase (30) ausgebildeten, zweiten Sperre so elastisch biegsam ist, dass die Nase (30) durch Druck auf den Griff (5; 90) des Sprechhörers (2; 80) unter Überwindung des durch die Elastizität des Sprechhörergehäuses gegebenen Rastwiderstandes einrückt.

10. Sprechhörer nach einem der Ansprüche 7 bis 9, dadurch gekennzeichnet, dass die Ausrückvorrichtung (44; 110; 120, 121) mittels einer an einer Seite der Halterung (1; 82) angeordneten Drucktaste (44; 110) oder mittels einer von zwei beidseits an der Halterung (1; 82) angeordneten Drucktasten (120, 121) ausrückbar ist, und dass die bzw. jede der Drucktasten (44; 110; 120, 121) so neben dem Bügel (6; 81) des auf die Halterung (1; 82) aufgelegten Sprechhörers (2; 80) angeordnet ist, dass sie (44; 110) mit dem Daumen einer den Griff (5; 90) ergreifenden Hand bzw. die eine (120) mit dem Daumen der den Griff (5; 90) ergreifenden linken Hand und die andere (121) mit dem Daumen der den Griff (5; 90) ergreifenden rechten Hand betätigbar ist, und anschliessend der Daumen ohne Änderung der Position der den Griff (5; 90) haltenden Hand in den Raum zwischen dem Bügel (6; 81) und dem Griff (5; 90) einführbar ist.

**Claims**

1. Handset (2; 80) having a curved strap (6; 81), especially for a car telephone, characterised in that the curved strap (6; 80) is arranged on the inside of the part of the handle (5; 90) adjoining the earpiece (4; 88) and is so designed that the thumb of the user's hand, grasping the handle (5; 90) can be inserted into the space between the curved strap (6; 81) and the handle (5; 90), so that the handset (2; 80) remains held securely suspended from the thumb and the other fingers are freely available for other activities.

2. Handset according to claim 1, characterised in that the curved strap (6; 81) bridges the corner region between the earpiece (4; 88) and the handle (5; 90).

3. Handset according to claim 2, characterised in that the one end of the curved strap (81) is adjacent to the edge of that wall (92) of the earpiece (88) which has the sound aperture (91).

4. Handset according to claim 2 or 3, characterised in that the handset (80) is bent in an obtuse-angled manner in the longitudinal direction, in which respect the region of bending (89) is in that part of the handle (90) which adjoins the earpiece (88) and the curved strap (81) extends across the region of bending (89).

5. Handset according to one of claims 2 to 4, characterised in that provided on that side of the earpiece (88) which faces the mouthpiece (3) is at least one recess (86, 87) for the reception of at least one locking pawl (84, 85) or of at least one hook (112, 113) of a holder (82, 111) for the handset (80), in which respect either the curved strap (81) is narrower in design than the earpiece (88) and two recesses (86, 87) are provided one on each side of the curved strap (81), or the curved strap ist formed by two parts extending at a spacing side-by-side or is forked in the direction of the earpiece and the recess is provided between the two parts of fork limbs respectively of the curved strap.

6. Handset according to one of claims 1 to 5, with a holder (1; 82) which has a protruding region (16; 96) which support that side of the earpiece (4; 88) which faces the mouthpiece (3), characterised in that the curved strap (6; 81) is narrower than the earpiece (4; 88), and the protruding region (16; 96) has a depression (36; 94) which receives the curved strap (6; 81) upon replacement or hanging-up of the handset (2; 80) and in which the curved strap (6; 81) is secured against lateral displacement.

7. Handset according to one of claims 1 to 6, with a holder (1; 82) that is to be fastened in a vehicle, characterised in that the curved strap (6) or the earpiece (88) is secured on the holder (1; 82) by a lock (41, 42; 84, 85) which automatically engages upon the replacement or hanging-up respectively of the handset (2; 80) but which cannot be overcome by pulling on the replaced or respectively hung-up handset (2; 80) and which is releasable, for the taking-off or lifting respectively of the handset, by means of a disengaging device (44; 110; 120, 121).

8. Handset according to claim 7, in which respect the holder (1; 82) has two protruding regions (15, 16; 15, 96) which support the mutually facing sides of the mouthpiece and earpiece (3, 4; 3, 88) characterised in that the lock (41, 42; 84, 85) is mounted on the protruding region (16; 96) which supports the earpiece (4; 88) and the mouthpiece (3) is secured on the holder (1; 82) by a second lock (30; 123) which is mounted on or acts on the protruding region (15) supporting the mouthpiece (3) and which engages upon the replacement or hanging-up respectively of the handset (2; 80), but cannot be overcome by pulling on the replaced or respectively hung-up handset.

9. Handset according to claim 8, characterised in that the first lock is formed by at least one pawl (41, 42; 84, 85) spring-loaded and bevelled in the form of a catch and the second lock is formed by a corresponding pawl (123) or by a nose (30), in which respect the handset housing in the event of the second lock being designed as a nose (30) is so elastically pliant that the nose (30) engages by pressure on the handle (5; 90) of the handset (2; 80), which serves to overcome the detent resistance afforded by the elasticity of the handset housing.

10. Handset according to one of claims 7 to 9, characterised in that the disengaging device (44; 110; 120, 121) is releasable by means of a push-key or push-button (44; 110) arranged at one side of the holder (1; 82) or by means of one of two push-keys or push-buttons (120, 121) arranged at both sides of the holder (1; 82), and that the push-key or push-button or each of the push-keys or push-buttons (44; 110; 120, 121) respectively is arranged beside the curved strap (6; 81) of the handset (2; 82) replaced on the holder (1; 82), such that the push-key or push-button (44; 110) can be actuated by the thumb of a user's hand, grasping the handle (5; 90), or such that the one push-key or push-button (120) can be actuated by the thumb of the user's left hand, grasping the handle (5; 90) and the other push-key or push-button (121) can be actuated by the thumb of the user's right hand, grasping the handle (5; 90), and subsequently the thumb can be inserted into the space between the curved strap (6; 81) and the handle (5; 90) without changing the position of the hand holding the handle (5; 90).

**Revendications**

1. Combiné de type téléphonique (2; 80) muni d'un étrier (6; 81), en particulier pour un téléphone de voiture, caractérisé par le fait que l'étrier (6; 81) est disposé à la face interne de la partie de la poignée (5; 90) jouxtant la coquille d'écouteur (4; 88), et est réalisé de telle sorte que le pouce de la main de l'utilisateur saisissant la poignée (5; 90) puisse être engagé dans l'espace situé entre l'étrier (6; 81) et la poignée (5; 90), de façon que le combiné (2; 80), suspendu au pouce, demeure retenu de manière sûre et que les autres doigts soient librement disponibles pour d'autres tâches.

2. Combiné selon la revendication 1, caractérisé par le fait que l'étrier (6; 81) coiffe la zone d'angle située entre la coquille d'écouteur (4; 88) et la poignée (5; 90).

3. Combiné selon la revendication 1, caractérisé par le fait que l'une des extremités de l'étrier (81) se raccorde au bord de la paroi (92) de la coquille d'écouteur (88) qui est munie de la perforation d'écoute (91).

4. Combiné selon la revendication 2 ou 3, caractérisé par le fait que ce combiné (80) est coudé à angle obtus dans le sens longitudinale, le coude (89) étant formé dans la partie de la poignée (90) jouxtant la coquille d'écouteur (88), et l'étrier (81) s'étendant au-delà de ce coude (89).

5. Combiné selon l'une des revendications 2 à 4, caractérisé par le fait qu'au moins une échancrure (86, 87) est prévue, du côté de la coquille d'écouteur (88) tourné vers la coquille de microphone (3), afin de recevoir au moins un cliquet de verrouillage (84, 85) ou au moins un crochet (112, 113) d'un support (82, 111) du combiné (80), auquel cas soit l'étrier (81) est réalisé plus étroit que la coquille d'écouteur (88) et deux échancrures (86, 87) sont prévues de part et d'autre de cet étrier (81), soit l'étrier est formé par deux parties s'étandant en juxtaposition à distance l'une de l'autre, ou bien est fourchu en direction de la coquille d'écouteur et l'échancrure est prévue, respectivement, entre les deux parties ou branches de la fourche de l'étrier.

6. Combiné selon l'une des revendications 1 à 5, présentant un support (1; 82) muni d'une protubérance (16; 96) soutenant le côté de la coquille d'écouteur (4; 88) qui est tourné vers la coquille de microphone (3), caractérisé par le fait que l'étrier (6; 81) est plus étroit que la coquille d'écouteur (4; 88) et la protubérance (16; 96) comporte un renfoncement (36; 94) qui reçoit l'étrier (6; 81) lorsqu'on repose ou raccroche le combiné (2; 80), et dans lequel l'étrier (6; 81) est fermement retenu à l'encontre d'un coulissement latéral.

7. Combiné selon l'une des revendications 1 à 6, présentant un support (1; 82) devant être fixé dans un véhicule, caractérisé par le fait que l'étrier (6) ou la coquille d'écouteur (88) est fermement retenu, sur le support (1; 82), par l'intermédiaire d'un verrou (41, 42; 84, 85) qui s'encliquette automatiquement lorsqu'on repose ou raccroche le combiné (2; 80), qui ne peut toutefois pas être inhibé par traction exercée sur le combiné (2; 80) respectivement reposé ou raccroché, et qui est libérale au moyen d'un dispositif de déblocage (44; 110; 120, 121), en vue de soulever ou de décrocher le combiné.

8. Combiné selon la revendication 7, dans lequel le support (1; 82) présente deux protubérances (15, 16; 15, 96) soutenant les côtés des coquilles de microphone et d'écouteur (3, 4; 3, 88) qui sont tournés l'un vers l'autre, caractérisé par le fait que le verrou (41, 42; 84, 85) est monté sur la protubérance (16; 96) soutenant la coquille d'écouteur (4; 88) et la coquille de microphone (3) est fermement retenue, sur le support (1; 82), par l'intermédiaire d'un second verrou (30; 123) qui est monté ou en prise avec la protubérance (15) soutenant la coquille de microphone (3), qui s'encliquette lorsqu'on repose ou raccroche le combiné (2; 80), mais qui ne peut cependant pas être inhibé par traction exercée sur le combiné respectivement reposé ou raccroché.

9. Combiné selon la revendication 8, caractérisé par le fait que le premier verrou est formé par au moins un cliquet (41, 42; 84, 85) qui est chargé élastiquement et est biseauté à la manière d'un pêne de serrure, et le second verrou est formé par un cliquet correspondant (123) ou par un loquet (30), le boîtier du combiné étant, dans le cas où dans le second verrou est réalisé sous la forme d'un loquet (30), doué d'une souplesse élastique telle que le loquet (30) s'emboîte, par pression exercée sur la poignée (5; 90) du combiné (2; 80), en surmontant la résistance à l'encliquetage due à l'élasticité du boîtier du combiné.

10. Combiné selon l'une des revendications 7 à 9, caractérisé par le fait que le dispositif de déblocage (44; 110; 120, 121) peut être dégagé au moyen d'un bouton-poussoir (44; 110) placé d'un côté du support (1; 82), ou bien au moyen de l'un de deux boutons-poussoirs (120, 121) placés des deux côtés du support (1; 82); et par le fait que le ou, respectivement, chacun des boutons-poussoirs (44; 110; 120, 121) jouxte l'étrier (6; 81) du combiné (2; 80) reposé sur le support (1; 82), de telle manière qu'il (44; 110) puisse être actionné par le pouce d'une main saisissant la poignée (5; 90), ou bien que l'un (120) puisse être actionné par le pouce de la main gauche saisissant la poignée (5; 90), et l'autre (121) puisse être actionné par le pouce de la main droite saisissant la poignée (5; 90), et que, dans l'enchaînement, le pouce puisse être dans l'espace situé entre l'étrier (6; 81) et la poignée (5; 90), sans modifier la position de la main tenant la poignée (5; 90).

Fig. 1

Fig. 2

0 137 382

Fig. 4

Fig. 3

0 137 382

FIG. 5

FIG 6

FIG. 7

13

FIG. 8

FIG. 9

FIG. 12

FIG.13

Fig. 10

Fig. 11